**Europäisches Patentamt**

**European Patent Office**

**Office européen des brevets**

(19)

(11) Numéro de publication: **0 094 866**
**B1**

(12) **FASCICULE DE BREVET EUROPEEN**

(45) Date de publication du fascicule du brevet:
**16.10.85**

(51) Int. Cl.⁴: **H 04 B 9/00**

(21) Numéro de dépôt: **83400894.8**

(22) Date de dépôt: **03.05.83**

(54) **Dispositif de liaison conversationnelle de type BUS à fibres optiques unimodales.**

(30) Priorité: **14.05.82 FR 8208485**

(43) Date de publication de la demande:
**23.11.83 Bulletin 83/47**

(45) Mention de la délivrance du brevet:
**16.10.85 Bulletin 85/42**

(84) Etats contractants désignés:
**CH DE GB IT LI NL SE**

(56) Documents cités:
**FR - A - 2 309 890**
**US - A - 4 002 898**
**US - A - 4 234 969**

**ELECTRICAL COMMUNICATION, vol. 50, no. 1, 1975, Londres, G.B. C.P. SANDBANK: "Fiber optic communications: A survey"**
**FIRST EUROPEAN CONFERENCE ON OPTICAL FIBRE COMMUNICATION, no. 132, 16-18 septembre 1975, pages 131-134, Londres, G.B. E.A. ASH et al.: "Integrated optics for fibre communications systems"**

(73) Titulaire: **THOMSON-CSF, 173, Boulevard Haussmann, F-75379 Paris Cedex 08 (FR)**

(72) Inventeur: **d'Auria, Luigi, THOMSON-SCF SCPI 173, bld Haussmann, F-75379 Paris Cedex 08 (FR)**
Inventeur: **Papuchon, Michel, THOMSON-CSF SCPI 173, bld Haussmann, F-75379 Paris Cedex 08 (FR)**
Inventeur: **POCHOLLE, Jean-Paul, THOMSON-CSF SCPI 173, bld Haussmann, F-75379 Paris Cedex 08 (FR)**

(74) Mandataire: **Lepercque, Jean et al, THOMSON-CSF SCPI 173, Bld Haussmann, F-75379 Paris Cedex 08 (FR)**

# Description

La présente invention se rapporte à un dispositif de liaison conversationnel de type bus à fibres optiques unimodales qui permet de réaliser des liaisons entre différents appareils émetteurs et/ou récepteurs, par exemple entre des périphériques d'ordinateurs et une unité centrale.

Lorsque l'on désire raccorder une série d'appareils entre eux, on peut constituer un réseau plus ou moins maillé dont la complexité augmente avec le nombre des appareils.

Il est connu pour simplifier ce réseau d'utiliser un système appelé ligne bus et qui consiste en une liaison électrique, souvent multiconducteurs, sur laquelle sont raccordés en dérivation tous les appareils. Chacun émet et/ou reçoit sur cette liaison des signaux le plus souvent numériques. Lorsque la liaison est multiconducteurs, les signaux numériques sont composés de mots envoyés en parallèle à raison d'un bit par conducteur. Pour éviter que tous ces signaux se mélangent, on utilise soit un système d'allocation de temps à chaque appareil, soit un système d'adresse en début de message, et même souvent une combinaison de ces deux systèmes.

Des fibres optiques peuvent être utilisées pour remplacer les liaisons électriques et notamment dans le cas de liaison bus série.

Si toutefois le problème des fibres elles-mêmes est sensiblement résolu, tout au moins sur de courtes distances telles que celles utilisées dans les lignes bus, les dispositifs de raccordement à ces fibres sont encore à l'étude, notamment dans le cas d'une telle ligne où il est nécessaire de pouvoir émettre et recevoir les signaux optiques à l'aide si possible d'un dispositif unique.

Les liaisons conversationnelles par fibres optiques ont surtout été étudiées à partir de fibres multimodes et de coupleurs passifs. En ce qui concerne plus particulièrement les bus série, l'utilisation de coupleurs passifs conduit à une limitation rapide du nombre de terminaux que l'on peut brancher en série. L'utilisation de coupleurs actifs commutant partiellement ou totalement l'énergie lumineuse entre deux fibres optiques permet d'optimiser la structure série.

Cette commutation n'est cependant réaliste que lorsque les puissances de commande sont faibles et les vitesses de commutation élevées, pour des fréquences supérieures à 10 megahertz par exemple, ce qui conduit à associer des fibres optiques unimodales à des commutateurs optiques intégrés dont la sturcture et la technologie est connue.

De nombreux exemples ont été expérimentalement étudiés. Ces commutateurs constitués de guides d'ondes monomodes réalisés sur un substrat adéquat, en général électro-optique, permettent d'aiguiller la lumière d'un guide d'onde vers un autre avec une grande efficacité, la diaphonie étant meilleure que — 30 dB, avec des tensions de commande faibles de l'ordre du volt et des bandes passantes élevées de plusieurs gigahertz. On peut citer notamment par exemple les commutateurs réalisés sur des substrats en niobate de lithium.

Ainsi parmi les différents composants mis au point ces dernières années, dans le domaine de l'optique intégrée, on connaît les coupleurs utilisant deux portions parallèles de guide d'onde optique et dont le couplage est commandé à l'aide d'un jeu d'électrodes sous l'action d'une tension variable appliquée à ces électrodes. De tels coupleurs ont été décrits par exemple dans les demandes de brevet français publiés sous les numéros 2 299 662 et 2 309 890.

Une autre demande de brevet français publiée sous le numéro 2 410 884 décrit un dispositif optique intégré permettant de raccorder de manière contrôlable un appareil émetteur et/ou récepteur à une ligne bus optique en associant trois coupleurs du type décrit ci-dessus.

Mais les dispositifs de liaison conversationnelle de l'art connu présentent différents inconvénients: notamment ils utilisent plusieurs sources d'énergie lumineuse, une ligne bus en forme de boucle fermée, ce qui peut entraîner des collisions entre les informations arrivant en sens inverses dans cette boucle.

Il est également connu de par le brevet US-A-4 002 898 de n'utiliser qu'une source d'énergie lumineuse dans un dispositif de transmission à deux fibres optiques, mais l'une de ces fibres optiques sert de voie de distribution et l'autre de voie de communication, les informations optiques étant transférées de l'une à l'autre.

Le dispositif de l'invention présente l'avantage d'utiliser des boucles unidirectionnelles et des coupleurs plus simples; les commutateurs de chaque terminal servant de modulateurs fonctionnant par prélèvement d'énergie lorsque le terminal est émetteur, ou de préleveurs avec un taux variable lorsque le terminal est détecteur; une double boucle rendant possible la propagation de l'information émise en amont et en aval du terminal émetteur.

Une telle structure permet d'optimiser l'architecture du bus série, la source unique de forte puissance permettant un nombre élevé de terminaux et le commutateur rapide un débit élevé par exemple de l'ordre du gigabit/seconde.

Ainsi le dispositif de l'invention permet de réaliser avantageusement une liaison conversationnelle entre plusieurs terminaux fondée sur une architecture bus série en utilisant des fibres optiques unimodales et des commutateurs rapides.

L'invention a pour objet un dispositif de liaison conversationnelle de type bus à fibres optiques unimodales, comportant une ligne bus bidirectionnelle et des terminaux émetteurs et récepteurs d'informations reliés à cette ligne bus par des moyens de couplage bidirectionnels, cette ligne bus étant réalisée à partir de fibres optiques unimodales, le dispositif comprenant une source optique unique qui délivre une énergie lumineuse, au moins une première et une seconde fibre optique unimodale formant une première et une seconde boucle, des moyens de couplage prélevant de l'énergie lumineuse sur la ligne bus, des moyens séparateurs et de couplage permettant de séparer en deux parties égales l'énergie lumineuse issue de la source; caractérisé en ce que:

- les première et seconde boucles sont unidirectionnelles;

- les moyens de couplage sont réalisés par au moins un premier et un second commutateur à taux de prélèvement d'énergie lumineuse, commandable;

- la première boucle relie en série les premiers commutateurs de tous les moyens de couplage et la seconde boucle reliant, en sens inverse de la première boucle, les seconds commutateurs;

- et chacune des deux parties égales de l'énergie lumineuse est couplée à l'une des extrémités des deux fibres optiques unimodales;

- et en ce que les moyens de couplage des terminaux émetteurs prélèvent de l'énergie sur lesdites boucles avec un taux de prélèvement plus élevé que celui des moyens de couplage des terminaux récepteurs.

D'autres particularités et avantages de l'invention apparaîtront clairement dans la description suivante, présentée à titre d'exemple non limitatif, en regard des figures annexées qui représentent:

- la fig. 1 illustre un système de traitement de l'information utilisant une ligne bus optique;

- les fig. 2 et 3 illustrent un coupleur directionnel de type connu;

- les fig. 4 et 5 sont des diagrammes explicatifs du fonctionnement du coupleur représenté aux fig. 2 et 3;

- la fig. 6 illustre un dispositif de l'art connu;

- la fig. 7 illustre le dispositif de l'invention;

- les fig. 8 et 9 sont des exemples de réalisation de circuits optiques intégrés qui peuvent être utilisés dans un tel dispositif;

- la fig. 10 est une vue partielle du dispositif de l'invention;

- la fig. 11 représente une vue partielle d'une variante du dispositif de l'invention;

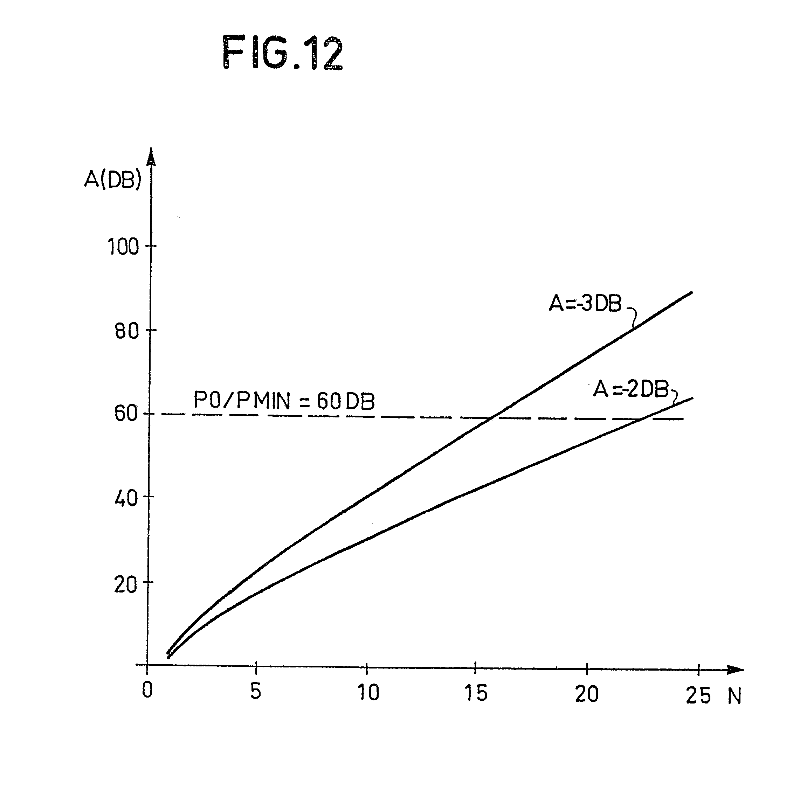

- la fig. 12 est un diagramme donnant les résultats obtenus avec le dispositif de l'invention.

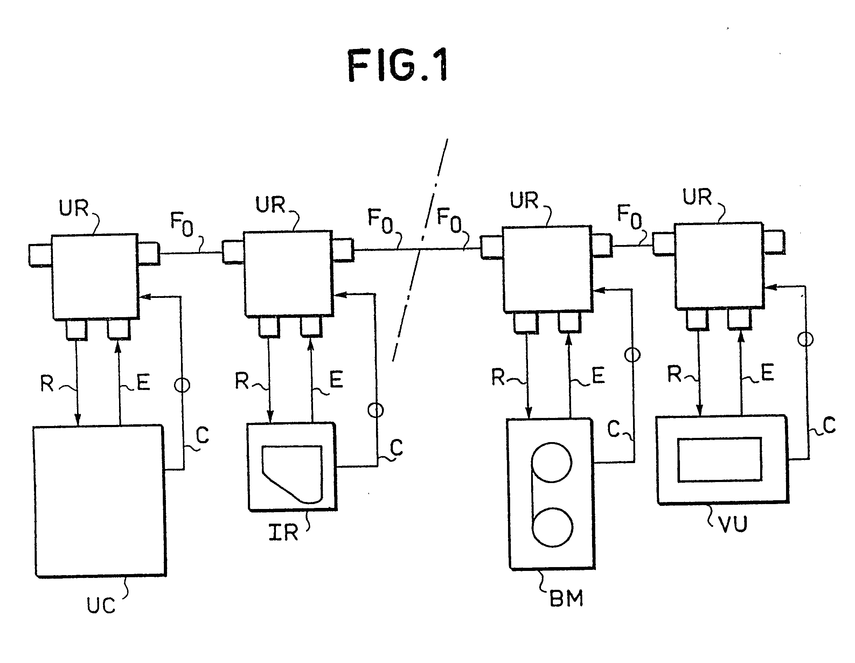

Le système de traitement de l'information représenté schématiquement sur la fig. 1 comprend une unité centrale UC reliée à des unités périphériques dont une imprimante IR, un dérouleur de bande BM, et une console de visualisation VU. Cette liaison se fait par une ligne bus composée de fibres optiques FO. Ces fibres optiques sont raccordées entre elles par des dispositifs de raccordement UR, lesquels permettent également de raccorder les différentes unités du système à ligne bus par des liaisons électriques d'émission E et de réception R. Chacun de ces dispositifs est également relié à l'unité qu'il dessert par une liaison C qui permet de commander les coupleurs qu'il contient.

Ainsi dans un système de ce type des fibres optiques peuvent être utilisées pour remplacer les liaisons électriques des dispositifs antérieurs de l'art connu.

Les avantages maintenant bien connus de ces fibres optiques rendent celles-ci très attrayantes comme moyen de transmission dans les liaisons conversationnelles en remplacement des lignes bus électriques. En plus d'un débit d'information plus élevé et d'une immunité totale aux interférences électromagnétiques, les fibres optiques présentent en effet l'intérêt de supprimer les problèmes d'adaptation d'impédance et de boucles de masse habituellement rencontrés dans les transmissions électriques.

Les deux configurations principales des systèmes de distribution de données sont la distribution série et la distribution étoile.

La distribution série se fait habituellement par une boucle ouverte ou fermée à laquelle N terminaux ont accès grâce à des éléments de couplage (coupleurs) comme le montre la fig. 1. L'information issue de l'émetteur de l'un quelconque des N terminaux est couplée dans le câble optique constituant la boucle et est distribuée à tous les récepteurs des N terminaux.

Le composant de base est un coupleur série à deux fois deux voies d'entrée/sortie, deux d'entre elles sont reliées à la fibre de transmission, un émetteur et un récepteur sont couplés aux deux autres.

Si $A_{E/F}, A_c, A_F$ et $A_{F/D}$ sont respectivement les pertes exprimées en décibels au couplage émetteur/fibre, à la connexion fibre/fibre, dans la fibre de transmission et au couplage fibre/détecteur, l'atténuation $A_s$ entre les puissances optiques émise par l'émetteur $E_1$ et recueillie par le détecteur $R_N$ est donnée par:

$$A_s = A_{E/F} + A_c + C + A_c + (N-2)A_T + 2(N-2)A_c + A_F + A_c + C + A_c + A_{F/D}$$

ou encore:

$$A_s = (2A_c + A_T)N + 2(C - A_T) + A_{E/F} + A_F + A_{F/D}$$

avec $N \geq 2$.

Une solution attirante consiste à réaliser des guides plans multimodes. Il est possible de construire une structure complète avec des coupleurs série. La structure désirée est obtenue à partir d'un masquage. Cette technique utilise des phénomènes de diffusion, par exemple d'ions métalliques dans un substrat en verre. On obtient ainsi des guides de section quasi semi-circulaires. La superposition de deux éléments de ce type permet de reconstituer un guide à section quasi circulaire mieux adapté au couplage avec la fibre de transmission.

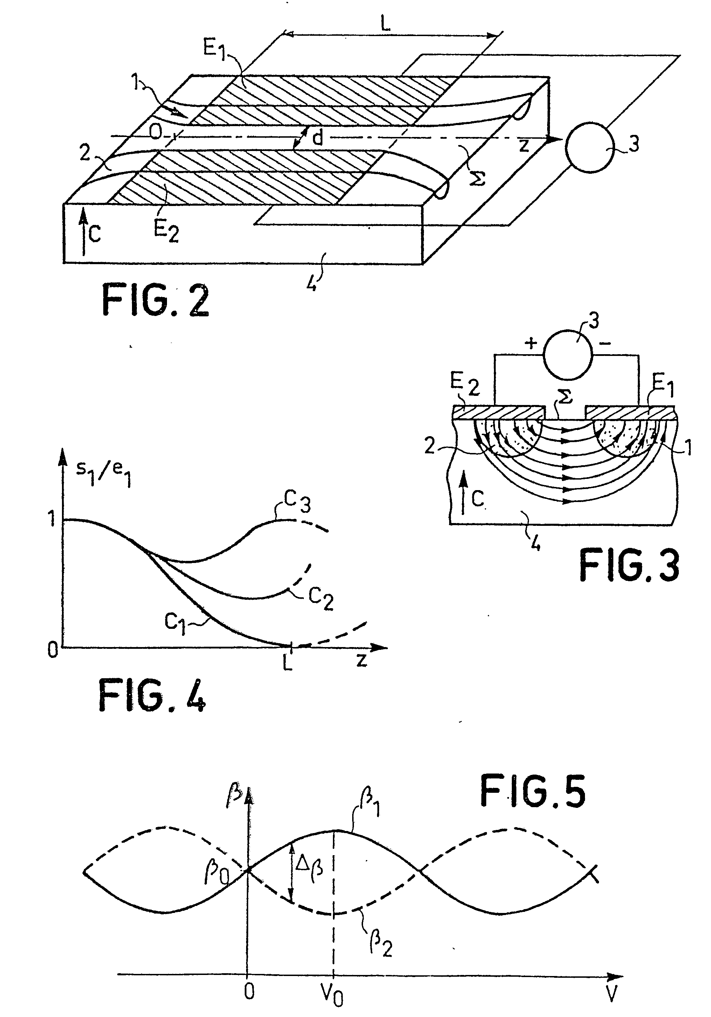

Les principales caractéristiques d'un dispositif de liaison conversationnelle utilisant des coupleurs directionnels de ce type vont être décrites brièvement en illustration des fig. 2 à 5.

La fig. 2 représente un coupleur directionnel de ce type en optique intégrée, dont on rappelle le fonctionnement comme commutateur électro-optique. Cet exemple de réalisation illustré à l'aide des fig. 2 à 5 est donné à titre d'exemple non limitatif. Deux guides d'ondes optiques 1 et 2 sont obtenus dans un substrat 4 par création de zones dans lesquelles l'indice de réfraction est supérieur à celui du substrat. Parmi d'autres, un procédé de réalisation classique est la diffusion de titane à la surface $\Sigma$ d'un substrat en niobate de lithium. Les guides 1 et 2, constitués du même matériau électro-optique, ont même largeur et même épaisseur. Ils sont parallèles, au moins sur une partie rectiligne de longueur L et sont alors distants d'une valeur d dont l'ordre de grandeur est de quelques fois la longueur d'onde des rayonnements optiques destinés à être propagés dans les guides.

Des électrodes métalliques $E_1$ et $E_2$ sont déposées sur la face du substrat portant les guides. Elles recouvrent entièrement respectivement les guides 1 et 2 sur la longueur L. Elles sont reliées à une source de tension 3.

Le coupleur est représenté en coupe sur la fig. 3, de façon à montrer l'allure des lignes de champs électriques créés lorsque la source 3 délivre une tension continue V. On sait que ces lignes de champ sont courbes, traversent les guides et le substrat en allant d'une électrode à l'autre, et sont, au niveau de la surface $\Sigma$ où sont disposées les électrodes, perpendiculaires à cette surface. Ainsi, on peut considérer que les champs électriques agissant sur les guides 1 et 2 sont sensiblement perpendiculaires à la surface $\Sigma$, égaux en valeur absolue et de signes contraires. La composante tangentielle est très faible, et de plus, de même sens pour les deux guides.

Dans le cas du niobate de lithium, on sait que les effets électro-optiques sont maximaux lorsque le champ électrique est parallèle à l'axe c du cristal. C'est ainsi que, sur les fig. 2 et 3, on a représenté l'axe c normal à la surface $\Sigma$. Par contre, lorsque l'axe c est perpendiculaire aux champs électriques, les effets électro-optiques sont très faibles. Ce serait le cas si l'axe c était parallèle à la surface $\Sigma$. Dans ce cas, on obtient par contre les effets maximaux avec une disposition d'électrodes différente de celle représentée sur les fig. 2 et 3. En effet, si l'on dispose les électrodes $E_1$ et $E_2$ de part et d'autre des guides 1 et 2, contiguës à ceux-ci mais ne les recouvrant pas, il est facile de montrer que les lignes de champ traversent les guides dans une direction sensiblement parallèle à la surface $\Sigma$.

En reprenant les configurations des fig. 2 et 3, le fonctionnement du commutateur est illustré par les courbes de la fig. 4. Il est supposé que de l'énergie lumineuse est introduite dans le guide 1 uniquement. Le diagramme de la fig. 4 donne les variations du rapport $s_1/e_1$, $e_1$ étant l'énergie couplée dans le guide 1, $s_1$ étant l'énergie présente dans ce même guide 1 au fur et à mesure de sa propagation, en fonction de la distance z parcourue par les ondes lumineuses, l'origine étant prise à l'extrémité de la zone de longueur L correspondant à l'entrée de l'énergie.

La courbe $C_1$ est obtenue lorsque la tension V délivrée par la source 3 est nulle. En raison du couplage entre les deux guides, l'énergie passe progressivement du guide 1 vers le guide 2 selon une loi sinusoïdale, si bien que le rapport $s_1/e_1$ varie selon la même loi. Il passe par 0 au bout d'une longueur $l_o$ appelée longueur de couplage au repos où le transfert d'énergie est total. Le transfert redevient nul au bout de 2 $l_o$, et ainsi de suite.

Lorsque la tension V appliquée aux électrodes n'est pas nulle, elle provoque par effet électro-optique des variations de vitesse de propagation des ondes dans les guides 1 et 2 sensiblement de même valeur absolue et de signes contraires. On obtient ainsi une différence $\Delta\beta$ entre les constantes de phase des deux guides, très inférieure à la valeur $\beta_o$ des constantes de phase dans le cas où V = 0.

Cette différence $\Delta\beta$ a deux effets: une diminution de la longueur de couplage $l_V < l_o$ et une diminution de ce couplage: le transfert n'est plus total pour $z = l_V$. On a

$$s_1/e_1 = \frac{1}{\frac{\Delta\beta^2}{4C^2}+1} \sin^2 cz \sqrt{\frac{\Delta\beta^2}{4C^2}+1}$$

où C est le coefficient de couplage qui dépend notamment de la distance inter-guides d et des indices de répartition du substrat et des guides:

$$C = \frac{l}{l_o}$$

La courbe $C_2$ est obtenue pour une faible valeur de V. Si l'on fait croître cette valeur, on arrive au cas de $C_3$ où la longueur de couplage $l_V$ est égale à

$$\frac{l_o}{2}$$

Dans ce cas, pour $z = l_o$, où le transfert étant total avec V = 0, le transfert est nul. En choisissant $L = l_o$ ou un multiple impair de $l_o$, on recueille, lorsque V = 0, toute l'énergie dans le guide 2 et il existe une valeur de $\Delta\beta$ pour laquelle au contraire toute l'énergie est recueillie dans le guide 1. On a ainsi un commutateur. La valeur adéquate de $\Delta\beta$ dépend étroitement de la longueur L.

La fig. 5 illustre les variations des vitesses de propagation $\beta_1$ et $\beta_2$ dans les guides 1 et 2 en fonction de la valeur de la tension appliquée V. Lorsque V = 0, les vitesses $\beta_1$ et $\beta_2$ ont une valeur commune $\beta_o$. Lorsque V augmente, $\beta_1$ augmente et $\beta_2$ diminue. Les variations sont sinusoïdales et en sens contraires. A partir d'une certaine valeur de tension Vo, $\beta_1$ est maximal et $\beta_2$ minimal, si bien que la différence $\Delta\beta$ est maximale. Cette différence décroît ensuite jusqu'à V = 2Vo, etc. Lorsqu'on inverse la polarité de la tension V, les variations sont semblables mais de sens opposés. On constate donc que, pour obtenir une valeur précise de $\Delta\beta$, celle qui conduit par exemple à l'un des deux états du commutateur, il faut que V appartienne à une gamme de valeurs précises.

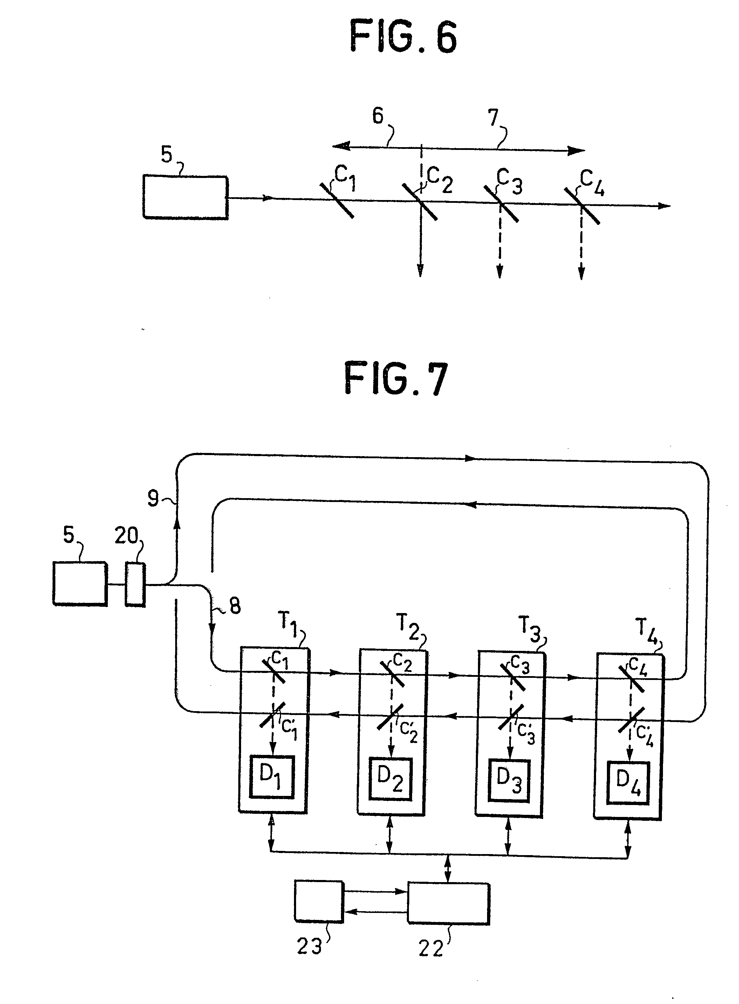

Pour bien mettre en relief le dispositif de l'invention, la fig. 6 illustre schématiquement un dispositif de l'art connu et la fig. 7 le dispositif de l'invention.

Si on intercale en série, comme représenté sur la fig. 6, dans le trajet guidé de la lumière issue d'une source 5 des dispositifs de prélèvement électriquement commandables ou coupleurs $C_i$, le prélèvement, commandé par le signal de modulation sur l'un quelconque des commutateurs, par exemple $C_2$ sur la fig. 6, est perçu en aval 7 de celui-ci si tous les autres commutateurs sont dans un état de prélèvement partiel par exemple les commutateurs $C_3$ et $C_4$ sur la fig. 6.

L'optimisation du système est atteinte lorsque le terminal émetteur prélève au rythme du signal à transmettre et distribuer avec un taux de 100%, et que les terminaux récepteurs prélèvent pendant toute la durée de la séquence d'information avec un taux de prélèvement tel que les puissances optiques détectées soient égales.

En effet, la source de lumière 5 émet un signal lumineux continu, et lorsqu'un émetteur veut envoyer de l'information il découpe ce signal lumineux continu, c'est un émetteur par ablation ou par prélèvement d'énergie lumineuse.

Afin que les terminaux situés en amont et en aval du terminal émetteur puissent tous détecter l'information issue de ce terminal, on peut adopter une configuration à double telle que celle qui est représentée à la fig. 7.

L'énergie lumineuse continue issue d'une source 5 est séparée en deux parties égales et couplée dans les deux fibres de la boucle 8 et 9 par un circuit 20 réalisé en optique intégrée, par exemple, c'est-à-dire de même type que le circuit décrit aux fig. 2 à 5. Chaque terminal $T_i$ comporte deux commutateurs $C_i$ et $C'_i$ branchés respectivement sur les fibres 8 et 9 et un photodétecteur $D_i$.

Le signal à transmettre et distribuer commande simultanément avec un taux de commutation de 100% les deux commutateurs du terminal émetteur, par exemple $C_2$ et $C'_2$ du terminal $T_2$ sur la fig. 7.

Les terminaux $T_3$ et $T_4$ situés en aval de $T_2$ sont tels que les commutateurs $C'_3$ et $C'_4$ ne prélèvent aucune fraction d'énergie circulant dans la fibre 9, alors que les commutateurs $C_3$ et $C_4$ prélèvent avec un taux optimisé une partie de l'énergie circulant dans la fibre 8 modulée par le commutateur $C_2$.

Le terminal $T_1$, situé en amont de $T_2$ est tel que le commutateur $C_1$ ne prélève aucune fraction de l'énergie circulant dans la fibre 8 alors que le commutateur $C'_1$ prélève une partie de l'énergie circulant dans la fibre 9 modulée par le commutateur $C'_2$.

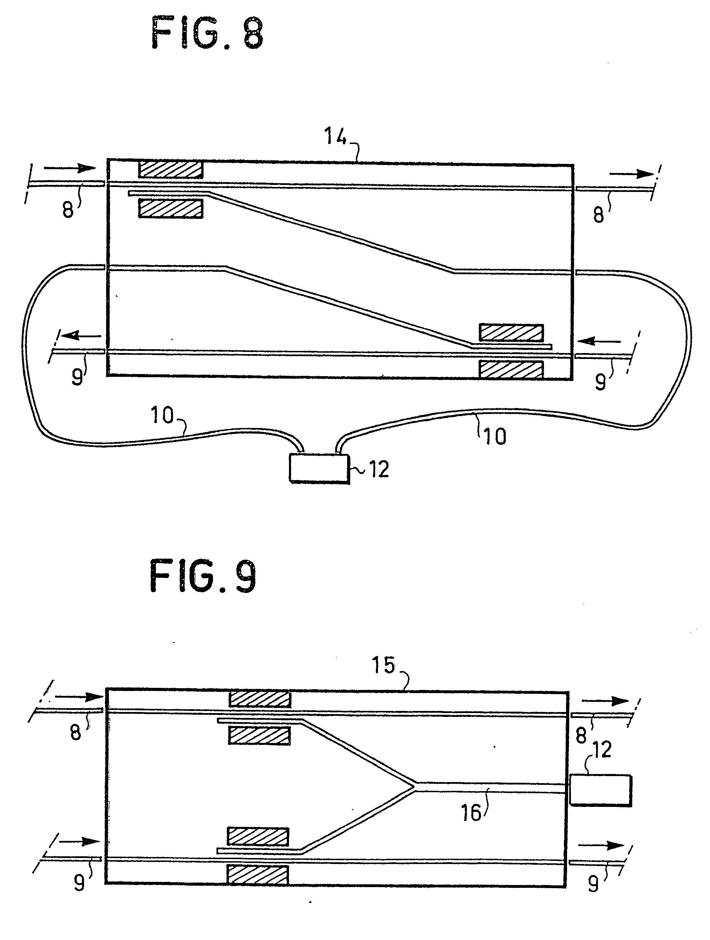

La fig. 8 donne des exemples de réalisations des circuits optiques intégrés utilisables dans un tel système.

En général deux commutateurs sont utilisés, un pour chaque ligne du bus.

Dans la fig. 8, les deux lignes du bus 8 et 9 entrent et sortent du circuit 14 par les deux côtés de ce circuit 14. Quand le terminal est en position réception sur une ligne, le commutateur correspondant est réglé au taux de prélèvement permettant d'optimiser la liaison; l'autre commutateur laisse alors passer l'information de l'autre ligne sans prélèvement; cet état est alors dit parallèle. Deux fibres optiques 10 et 11 sont alors nécessaires pour connecter le photodétecteur 12 aux deux guides libres des commutateurs.

Sur la fig. 9, les deux lignes 8 et 9 entrent et sortent par les mêmes côtés du circuit 15. Les deux sorties libres des commutateurs sont alors combinées dans un guide unique non monomode 16 sur le circuit 15 lui-même. Une fibre optique peut permettre la connexion au photodétecteur 12 qui peut aussi être réalisée directement.

Dans la position d'émission, des deux commutateurs du circuit sont commandés par le signal de modulation de façon à envoyer l'information sur les deux lignes du bus.

Il faut noter que des configurations particulières de commutateurs de l'art connu tels que les commutateurs décrits dans l'article publié dans Applied Physics Letters de RC Alferness en 1979 (volume 35, p. 260) permettent de réaliser des circuits dont le fonctionnement est insensible à la polarisation lumineuse incidente, donnant ainsi la possibilité d'utiliser des fibres standard pour les lignes du bus qui ne préservent pas un état de polarisation donné.

De même en utilisant des fibres conservant la polarisation de la lumière, les circuits optiques intégrés peuvent alors ne pas être insensibles à cette polarisation.

Connaissant l'ordre du terminal détecteur par rapport au terminal émetteur, il est possible de déterminer, en utilisant un calculateur ou tout organe analogue, le taux de prélèvement optimum de ce terminal détecteur en fonction du nombre de terminaux détecteurs placés en aval du terminal émetteur et de l'atténuation due aux pertes d'insertion des préleveurs et aux pertes de transmission.

Ainsi le fonctionnement de ce dispositif est tel que lors d'un changement de terminal émetteur, le taux de prélèvement est d'abord un taux moyen, puis après calcul un taux optimum fonction de la position du récepteur. Pour effectuer ce calcul, on utilise un calculateur ou tout organe analogue.

Ainsi, à chaque fois, on optimise la liaison en temps réel.

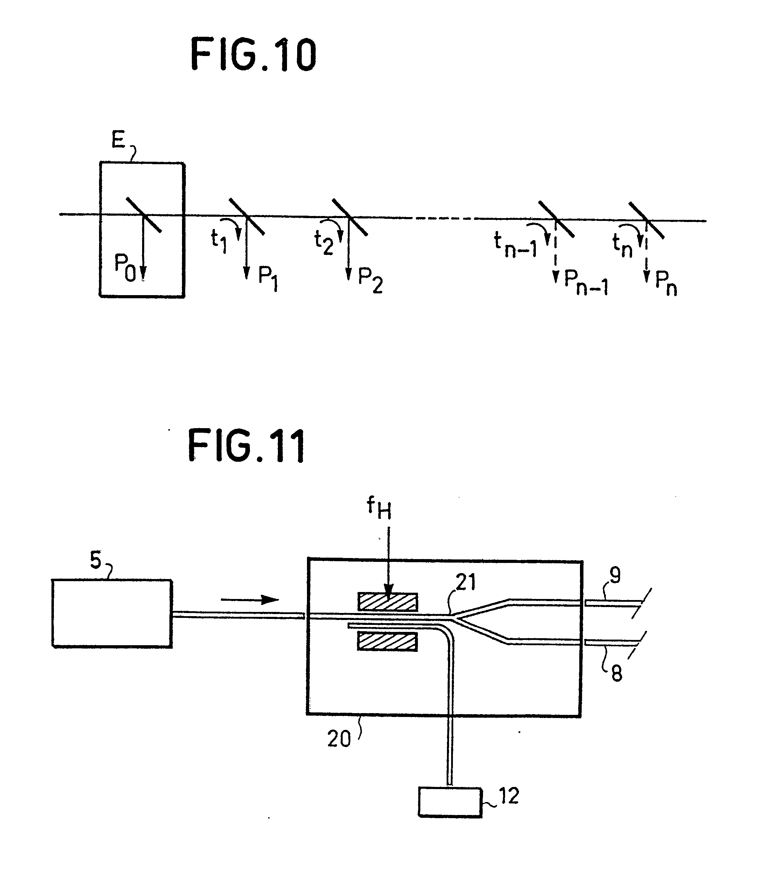

Soit Po la puissance optique commutée par le terminal émetteur E représenté à la fig. 10, si le taux de modulation est de 100%, Po est la valeur de la puissance continue circulant dans la fibre au niveau de ce terminal émetteur.

Soient $p_1$, $p_2$, $p_n$ les puissances optiques prélevées par les terminaux d'ordre 1, 2 ... n placés en aval du terminal émetteur E.

Soit A le coefficient de transmission séparant deux terminaux. A tient compte à la fois des pertes linéiques du tronçon séparant deux terminaux et des pertes d'insertion du commutateur du terminal récepteur; on suppose que A est constant; les pertes linéiques entre deux terminaux successifs étant considérées, ainsi que les pertes d'insertion pour tous les terminaux, comme toutes identiques.

Soit $P_{i-1}$ la puissance optique modulée issue, après prélèvement, du terminal d'ordre i-1, on définit le taux de prélèvement du terminal d'ordre i comme:

$$t_i = \frac{p_i}{A \cdot P_i}$$

$t_i$ est donc le rapport entre la puissance optique prélevée par le commutateur de rang i et la puissance optique disponible au niveau de ce commutateur.

On désire que toutes les puissances optiques prélevées soient égales, soit:

$$p_1 = p_2 = ... = p_n = p$$

On peut écrire:

$$n \cdot p = P_o A^n$$
$$t_n = 1$$

avec $\pi$ représentant la fonction produit

$$pj = P_o A^j \prod_{i=1}^{i=j-1} (1-ti)tj \text{ avec } 1 < j \le n$$

soit

$$\prod_{i=1}^{i=j-1} (1-ti)tj = \frac{A^{n-j}}{n} \qquad (1)$$

si $j=1$ on obtient $t_1 = \dfrac{A^{n-1}}{n}$

si $j=2$ on obtient $(1-t_1)t_2 = \dfrac{A^{n-2}}{n}$;

ainsi $t_2 = \dfrac{A^{n-2}}{n} \dfrac{1}{1-\dfrac{A^{n-1}}{n}} = \dfrac{A^{n-2}}{n-A^{n-1}}$

si $j=3$ on obtient $(1-t_1)(1-t_2)t_3 = \dfrac{A^{n-3}}{n}$;

ainsi $t_3 = \dfrac{A^{n-3}}{n} \dfrac{1}{\left(1-\dfrac{A^{n-1}}{n}\right)} \cdot \dfrac{1}{\left(1-\dfrac{A^{n-2}}{n-A^{n-1}}\right)}$

La formule (1) permet par itérations successives de calculer pour chaque terminal, en fonction de son ordre, le taux de prélèvement optimal du commutateur associé.

Afin de régler le taux de prélèvement optimal de chaque terminal détecteur, il est nécessaire que ces derniers connaissent leur rang par rapport au terminal émetteur. Deux cas peuvent être retenus dépendant du protocole de la liaison conversationnelle.

Dans le cas d'un accès aléatoire le terminal émetteur en cours de fonctionnement identifie, en fin d'émission, le prochain terminal émetteur et envoie cette information à tous les terminaux détecteurs qui peuvent dès cet instant situer leur rang en amont et en aval de ce prochain terminal émetteur et détermine le taux de prélèvement des commutateurs associés, grâce à la formule (1).

Dans le cas d'un accès séquentiel, le protocole détermine, en l'absence d'échange d'informations, un balayage séquentiel de tous les terminaux qui sont donc émetteur à tour de rôle, ce qui fixe donc une séquence déterminée dans le taux de prélèvement des terminaux détecteurs. Dans le cas où un des terminaux doit envoyer de l'information, il y a arrêt sur celui-ci le temps de la transmission de cette information et reprise du balayage séquentiel.

Ainsi sur la fig. 7, le calculateur 22, qui peut être par exemple un microprocesseur, connaît en temps réel quel est le terminal émetteur. Il est relié à une mémoire 23 dans laquelle a été mémorisée par exemple un protocole décrivant les priorités dans les liaisons entre terminaux; chaque terminal ayant par exemple un numéro qui permet de le reconnaître et de l'adresser.

Il est possible, à partir de la configuration décrite plus haut, de réaliser une liaison bus série dans laquelle la modulation est imprimée non plus sur un signal optique continu, mais un signal modulé à une fréquence horloge $f_H$, ce qui simplifie les problèmes de synchronisation de l'ensemble de la liaison.

Une horloge centralisée peut être simplement réalisée en ajoutant un circuit optique intégré 20 spécifique en sortie du laser 5 comme représenté à la fig. 11; ce circuit 20 réalisant à la fois la fonction de modulation et de séparation. Il suffit alors de commander le modulateur à la fréquence horloge $f_H$.

Un exemple de réalisation d'un tel circuit est représenté sur la fig. 11. Le laser source 5 est couplé à un guide du circuit optique intégré 20. Un commutateur placé à sa suite permet d'imprimer la modulation sur le signal lumineux. Dans l'un des bras de sortie du commutateur, on peut placer un détecteur 12 permettant de contrôler le signal émis. Sur l'autre bras du commutateur, on place une bifurcation 21 symétrique monomode permettant de séparer la puissance optique en deux parties égales qui peut alors être couplée dans les deux lignes du bus 8 et 9.

Ce commutateur 20, qui est celui qui a été considéré à la fig. 7, est du type commutateur électro-optique, c'est-à-dire que les guides d'ondes optiques sont obtenus dans le substrat par création de zones dans lesquelles l'indice de réfraction est supérieur à celui du substrat. Parmi d'autres, un procédé de réalisation classique est la diffusion de titane à la surface $\Sigma$ d'un substrat en niobate de lithium. Ces guides, constitués du même matériau électro-optique, ont même largeur et même épaisseur. Ils sont parallèles, au moins sur une partie rectiligne de longueur et sont alors distants d'une valeur dont l'ordre de grandeur est de quelques fois la longueur d'onde des rayonnements optique destinés à être propagés dans les guides. Des électrodes métalliques sont déposées sur la face du substrat portant les guides. Elles recouvrent entièrement respectivement ces guides sur une certaine longueur. Elles sont reliées à une source de tension qui dans ce cas est ici un signal horloge qui peut être un signal carré qui fluctue à une fréquence $f_H$.

Ainsi le dispositif de l'invention présente les avantages suivants:

Du fait de la source unique (5), le couplage source/fibre n'intervient qu'une fois. La source peut être choisie de forte puissance, ce qui permet un plus grand nombre de terminaux qui peuvent être d'une complexité plus grande. Si les terminaux sont dans un environnement sévère, la source peut être particulièrement protégée (systèmes embarqués par exemple).

Du fait de la boucle à deux fibres, la double boucle ouverte permet la distribution simultanée en amont et en aval et évite les collisions d'une boucle fermée.

Du fait de l'utilisation de commutateurs optiques intégrés et de fibres optiques unimodales, une faible puissance de commande est nécessaire et un grand débit potentiel peut être obtenu.

De plus si le terminal n'est pas alimenté, en cas de panne par exemple, les commutateurs $C_i$ et $C'_i$ sont réalisés pour être dans l'état passant et le bus n'est donc alors pas interrompu.

Les performances du système proposé peuvent se calculer à partir de la relation donnée précédemment:

$$n\, p = P_o A^n$$

que l'on écrit:

$$n_{MAX} \cdot P_{min} = P_{MAX} \cdot A^{n_{MAX}}$$

où $P_{MAX}$ est la puissance optique maximum injectée dans la fibre unimodale, limitée soit par le type de source utilisée qui peut être par exemple une diode laser, soit par l'apparition de phénomènes non linéaires dans la fibre en utilisant par exemple un laser YAG, qui est un laser de forte puissance d'émission, ce qui permet alors de compenser les pertes en ligne.

$P_{min}$ est la puissance optique modulée minimum détectable pour un débit d'information et un taux d'erreurs déterminés et pour une chaîne de détection donné incluant le détecteur $D_i$.

$n_{MAX}$ est le nombre maximum de terminaux connectables sur la liaison.

La courbe de la fig. 13 montre les variations de $n_{MAX}$ en fonction du rapport $P_{MAX}/P_{min}$ pour $A = 0,5$, soit une perte d'insertion du commutateur et de transmission dans la fibre de 3 dB.

Pour un débit de 1 gigabit/seconde et un taux d'erreur de $10^{-9}$, la puissance optique minimum nécessaire est de l'ordre de 1 microwatt. Si $p_{MAX}$ est égal à 1 watt, en utilisant alors un laser YAG, le nombre maximum de terminaux est dans ce cas de l'ordre de seize.

## Revendications

1. Dispositif de liaison conversationnelle de type bus à fibres optiques unimodales, comportant une ligne bus bidirectionnelle et des terminaux émetteurs et récepteurs d'informations reliés à cette ligne bus par des moyens de couplage bidirectionnels, cette ligne bus étant réalisée à partir de fibres optiques unimodales, ce dispositif comprenant une source optique unique (5) qui délivre une énergie lumineuse, au moins une première et une seconde fibre optique unimodale (8, 9) formant une première et une seconde boucle, des moyens de couplage prélevant de l'énergie lumineuse sur la ligne bus, des moyens séparateurs et de couplage (20) permettant de séparer en deux parties égales l'énergie lumineuse issue de la source (5); caractérisé en ce que:

— les première et seconde boucles sont unidirectionnelles;

— les moyens de couplage sont réalisés par au moins un premier et un second commutateur ($C_i$, $C'_i$) à taux de prélèvement d'énergie lumineuse commandable;

— la première boucle relie en série les premiers commutateurs ($C_i$) de tous les moyens de couplage et la seconde boucle reliant, en sens inverse de la première boucle, les seconds commutateurs ($C'_i$);

— et chacune des deux parties égales de l'énergie lumineuse est couplée à l'une des extrémités des deux fibres optiques unimodales (8, 9);

— et en ce que les moyens de couplage des terminaux émetteurs prélèvent de l'énergie sur lesdites boucles avec un taux de prélèvement plus élevé que celui des moyens de couplage des terminaux récepteurs.

2. Dispositif selon la revendication 1, caractérisé en ce qu'il comporte des moyens de calculs reliés aux différents moyens de couplage permettant d'optimiser le taux de prélèvement des terminaux récepteurs d'information, chaque moyen de couplage étant relié à un détecteur ($D_i$) permettant de mesurer le taux de couplage à la ligne bus.

3. Dispositif selon la revendication 1, caractérisé en ce que la source (5) émet une énergie lumineuse constante.

4. Dispositif selon la revendication 1, caractérisé en ce que les moyens séparateurs et de couplage (20) sont réalisés par un circuit optique intégré disposé à la sortie de la source (5); ce circuit comprenant des guides d'ondes formés dans un matériau électro-optique et des électrodes créant un champ électrique destiné à moduler la vitesse des rayonnements optiques propagés par ces guides dans deux tronçons adjacents, afin d'effectuer un transfert d'énergie en fonction d'une tension de commande, l'un de ces guides comportant une bifurcation (21) symétrique monomode permettant de séparer l'énergie lumineuse en deux parties égales, couplées dans les deux fibres optiques (8, 9).

5. Dispositif selon la revendication 4, caractérisé en ce que le matériau électro-optique est du niobate de lithium, les guides étant obtenus par diffusion de titane dans ce matériau.

6. Dispositif selon la revendication 4, caractérisé en ce que des moyens de modulation sont reliés aux électrodes afin d'effectuer un transfert d'énergie variant à une fréquence horloge ($f_H$), l'énergie lumineuse étant ainsi modulée à cette fréquence ($f_H$).

7. Dispositif selon la revendication 1, caractérisé en ce que les deux commutateurs ($C_i$, $C'_i$) sont des commutateurs électro-optiques à commande électrique.

8. Dispositif selon la revendication 7, caractérisé en ce que les deux commutateurs ($C_i$, $C'_i$) comprennent des guides d'ondes monomodes formés dans un matériau électro-optique et des électrodes créant un champ électrique destiné à moduler la vitesse de l'énergie lumineuse propagée par ces guides dans des tronçons adjacents, afin d'effectuer un transfert d'énergie en fonction de tensions de commande.

9. Dispositif selon la revendication 8, caractérisé en ce que le matériau électro-optique est du niobate de lithium, les guides étant obtenus par diffusion de titane dans ce matériau.

10. Dispositif selon la revendication 1, caractérisé en ce que la liaison conversationnelle est du type aléatoire.

11. Dispositif selon la revendication 1, caractérisé en ce que la liaison conversationnelle est du type séquentiel.

## Patentansprüche

1. Zweiweg-Sammelleiterverbindungsvorrichtung mit eingipfligen Lichtleitern, die einen Zweiwegsammelleiter und Informations-Sende- und Empfangsendstationen aufweist, welche an den Sammelleiter über Zweiweg-Kopplungsmittel angeschlossen sind, wobei der Sammelleiter aus eingipfligen Lichtleitern besteht und wobei die Vorrichtung eine einzige, Lichtenergie abstrahlende optische Quelle (5) aufweist und ein erster eingipfliger und ein zweiter eingipfliger Lichtleiter (8, 9) eine erste und eine zweite Schleife bilden, während Kopplungsmittel vorgesehen sind, die vom Sammelleiter Lichtenergie abnehmen, sowie Trenn- und Kopplungsmittel (20), vermittels welcher die von der Quelle (5) herrührende Lichtenergie in zwei gleiche Teile teilbar ist, dadurch gekennzeichnet:
— dass die erste Schleife und die zweite Schleife einwegig sind;
— dass die Kopplungsmittel wenigstens einen ersten Schalter und einen zweiten Schalter ($C_i$, $C'_i$) für regulierbare Lichtenergiemengenentnahme umfassen;
— dass die erste Schleife die ersten Schalter ($C_i$) aller Kopplungsmittel in Reihe miteinander verbindet, während die zweite Schleife in umgekehrter Richtung in bezug auf die erste Schleife die zweiten Schalter ($C'_i$) miteinander verbindet;
— dass jeder der beiden gleichen Lichtenergieteile an eines der Enden der beiden eingipfligen Lichtleiter angekoppelt ist;
— und dass die Kopplungsmittel der Sendeendstationen von den Schleifen Energie mit einer höheren Energieentnahmerate entnehmen als die Kopplungsmittel der Empfangsendstationen.

2. Vorrichtung nach Anspruch 1, dadurch gekennzeichnet, dass sie Rechenmittel aufweist, die mit den verschiedenen Kopplungsmitteln verbunden sind, derart, dass die Entnahmerate der Informationsempfangsendstationen optimiert wird, wobei jedes Kopplungsmittel an einen Detektor ($D_i$) angeschlossen ist, durch den der Kopplungsgrad der Kopplung mit dem Sammelleiter messbar ist.

3. Vorrichtung nach Anspruch 1, dadurch gekennzeichnet, dass die Quelle (5) eine konstante Lichtenergie abgibt.

4. Vorrichtung nach Anspruch 1, dadurch gekennzeichnet, dass die Trenn- und Kopplungsmittel (20) einen am Ausgang der Quelle (5) angeordneten, integrierten optischen Kreis umfassen, welcher aus elektro-optischem Material bestehende Wellenleiter sowie Elektroden aufweist, die ein elektrisches Feld erzeugen, durch welches die Geschwindigkeit der durch diese Wellenleiter in zwei benachbarte Abschnitte abgestrahlten Lichtstrahlen modulierbar ist, um eine Energieübertragung in Abhängigkeit von einer Steuerspannung zu bewirken, wobei einer der Wellenleiter eine symmetrische Einmodenabzweigung (21) aufweist, die es gestattet, die Lichtenergie in zwei gleiche Teile zu teilen, die in den beiden Lichtleitern (8, 9) gekoppelt werden.

5. Vorrichtung nach Anspruch 4, dadurch gekennzeichnet, dass das elektro-optische Material Lithiumniobat ist, wobei die Wellenleiter durch Diffusion von Titanium in diesem Material erzeugt werden.

6. Vorrichtung nach Anspruch 4, dadurch gekennzeichnet, dass Modulationsmittel mit den Elektroden verbunden sind, um eine veränderliche Energieübertragung mit einer Zeitgeberfrequenz ($f_H$) zu bewirken, wobei die Lichtenergie durch diese Frequenz ($f_H$) moduliert wird.

7. Vorrichtung nach Anspruch 1, dadurch gekennzeichnet, dass die beiden Schalter ($C_i$, $C'_i$) elektrisch gesteuerte elektro-optische Schalter sind.

8. Vorrichtung nach Anspruch 7, dadurch gekennzeichnet, dass die beiden Schalter ($C_i$, $C'_i$) Einmodenwellenleiter umfassen, die aus elektrooptischem Material bestehen, sowie Elektroden, die ein elektrisches Feld erzeugen, das dazu bestimmt ist, die Geschwindigkeit der von diesen Wellenleitern in benachbarten Abschnitten fortgeleiteten Lichtenergie zu modulieren, um eine Energieübertragung in Abhängigkeit von Steuerspannungen zu bewirken.

9. Vorrichtung nach Anspruch 8, dadurch gekennzeichnet, dass das elektro-optische Material Lithiumniobat ist, wobei die Wellenleiter durch Diffusion von Titanium in diesem Material hergestellt sind.

10. Vorrichtung nach Anspruch 1, dadurch gekennzeichnet, dass die Zweiwegverbindung unbestimmter Natur ist.

11. Vorrichtung nach Anspruch 1, dadurch gekennzeichnet, dass die Zweiwegverbindung sequential ist.

## Claims

1. Conversational connection device of the type comprising a unimodal optical fibre bus, including a bidirectional bus line and terminals for emitting and receiving information, which are connected to said bus line by bidirectional coupling means, said bus line being implemented by providing unimodal optical fibres, said device comprising a single optical source (5) which delivers luminous energy, at least one first and one second unimodal optical fibre (8, 9) constituting a first loop and a second loop, coupling means picking up luminous energy from said bus line, separating and coupling means (20) allowing the luminous energy issuing from said source (5) to be divided into two equal parts, characterized in that:
— the first and second loops are unidirectional;

— the coupling means comprise at least one first and one second switch ($C_i$, $C'_i$) with a controllable luminous energy pick-up rate;

— the first loop connects in series the first switches ($C_i$) of all the coupling means and the second loop connecting, inversely with respect to the first loop, the second switches ($C'_i$);

— and each one of said equal parts of luminous energy is coupled to one of the ends of the two unimodal optical fibres (8, 9);

— and in that the coupling means of the emitting terminals pick-up energy from said loops with a pick-up rate higher than that of the coupling means of the receiving terminals.

2. Device according to claim 1, characterized in that it comprises computing means connected to the different coupling means allowing to optimize the pick-up rate of the information receiving terminals, each coupling means being connected to a detector ($D_i$) allowing the rate of coupling to the bus line to be measured.

3. Device according to claim 1, characterized in that the source (5) emits a constant luminous energy.

4. Device according to claim 1, characterized in that the separation and coupling means (20) are constituted by an integrated optical circuit arranged at the output of the source (20), said circuit comprising wave guides made of an electro-optical material and electrodes generating an electric field adapted to modulate the speed of the optical rays propagated by said guides in two adjacent segments, so as to provide an energy transfer in accordance with a control voltage, one of said guides comprising a monomode symmetrical branching (21) allowing the luminous energy to be divided into two equal parts coupled in the two optical fibres (8, 9).

5. Device according to claim 4, characterized in that the electro-optical material is lithium niobate, said guides being obtained by diffusion of titanium in said material.

6. Device according to claim 4, characterized in that modulation means are connected to the electrodes for providing a variable energy transfer at a clock frequency ($f_H$), the luminous energy thus being modulated at that frequency ($f_H$).

7. Device according to claim 1, characterized in that said two switches ($C_i$, $C'_i$) are electrically controlled optical switches.

8. Device according to claim 1, characterized in that the two switches ($C_i$, $C'_i$) comprise wave guides made of an electro-optical material and electrodes generating an electric field adapted to modulate the speed of the luminous energy propagated by said guides in adjacent segments, so as to provide an energy transfer in accordance with control voltages.

9. Device according to claim 8, characterized in that the electro-optical material is lithium niobate, said guides being obtained by diffusion of titanium in this material.

10. Device according to claim 1, characterized in that the conversational connection is of the random type.

11. Device according to claim 1, characterized in that the conversational connection is of the sequential type.

# FIG.1

0 094 866

0 094 866

FIG. 2

FIG. 3

FIG. 4

FIG. 5

13

# FIG. 6

# FIG. 7

# FIG. 8

14

8

8

9

9

10

10

12

# FIG. 9

15

8

8 12

9

9

16

# FIG.10

# FIG.11

# FIG.12